# FASCICULE DE BREVET EUROPEEN

(11) **EP 1 175 995 B1**
(45) Date de publication et mention de la délivrance du brevet: **08.06.2005**
(21) Numéro de dépôt: 01401746.1
(22) Date de dépôt: 29.06.2001
(51) Int. Cl.: B30B 9/22

(54) **Pressoir pour matière telle que de la vendange**
Presse für Gut von der Traubenernte
Press for material from grape harvesting

(30) Priorité: 27.07.2000 FR 0009864
(43) Date de publication de la demande: 30.01.2002
(73) Titulaire: SOMAVI, F-34510 Florensac (FR)
(72) Inventeur: Pera, Didier, 34290 Montblanc (FR); Pera, Jean, 34300 Cap d'Agde (FR)
(74) Mandataire: Santarelli

(56) Documents cités:
- WO-A-00/30841
- FR-A- 2 336 241
- US-A- 4 651 638
- US-A- 4 763 495

## Description

L'invention a trait aux pressoirs pour séparer les parties solide et liquide d'une matière telle que de la vendange.

Une membrane pour un pressoir de ce type est décrite dans le brevet US-A-4 763 495.

On connaît déjà, notamment par la demande de brevet français 2 336 241, un tel pressoir qui comporte :
- une cage présentant une paroi latérale cylindrique et deux flasques fermant ladite cage respectivement à une extrémité et à l'autre extrémité de ladite paroi latérale ;
- une membrane souple déformable disposée dans ladite cage, fixée de manière étanche à la paroi latérale de celle-ci suivant deux bords longitudinaux opposés et fixée de manière étanche aux flasques suivant deux bords transversaux respectifs chacun situé entre une extrémité d'un bord longitudinal et une extrémité de l'autre bord longitudinal de sorte que ladite membrane sépare le volume interne de ladite cage en une chambre de pressurage délimitée par ladite membrane, par une première moitié de ladite paroi latérale située entre lesdits deux bords transversaux opposés et par une première moitié de chacun desdits flasques située, par rapport aux bords transversaux respectifs, du côté de la première moitié de la paroi latérale, et en une chambre de commande délimitée par ladite membrane, par la seconde moitié de ladite paroi latérale et par la seconde moitié de chacun desdits flasques, ladite membrane souple ayant au repos à peu près la forme d'une moitié de la cage ;
- des moyens de drainage équipant ladite première moitié de la paroi latérale de la cage ;
- des moyens d'introduction de ladite matière dans la chambre de pressurage ;
- des moyens de récupération de ladite partie liquide de cette matière quittant la chambre de pressurage par lesdits moyens de drainage ;
- des moyens d'admission d'un agent de pression dans ladite chambre de commande et des moyens d'aspiration dudit agent de pression hors de ladite chambre de commande ;
- des moyens de montage à rotation de ladite cage autour de son axe dans une position où celui-ci est disposé horizontalement ; et
- des moyens pour entraîner sélectivement à rotation ladite cage autour de son axe.

Dans la pratique, pour réaliser la membrane souple, on utilise une toile du type dont on fait les bateaux pneumatiques, qui est particulièrement solide car elle est renforcée par un tissu en fibres de polyester.

Avant de remplir la chambre de pressurage en matière telle que de la vendange, on actionne les moyens d'aspiration de l'agent de pression hors de la chambre de commande, de sorte que le vide se produit dans la chambre de commande et que la membrane se plaque contre la seconde moitié de la paroi latérale et des flasques de la cage, la membrane étant prévue légèrement plus grande que la moitié de la cage pour faciliter le montage.

Pour réaliser le pressurage, une fois le remplissage effectué, on actionne les moyens d'admission d'un agent de pression dans la chambre de commande, de sorte que la matière présente dans la chambre de pressurage est appliquée contre les moyens de drainage et mise sous pression, ce dont il résulte que la partie liquide de cette matière s'écoule au travers des moyens de drainage. En général, on procède à plusieurs phases de mise sous pression de la matière telle que de la vendange, les phases de pressurage étant séparées par des phases d'émiettage dans lesquelles l'on fait tourner la cage autour de son axe pour disloquer le gâteau de matière qui se forme sous l'effet de la pression.

Lors des phases d'émiettage, la membrane, grâce aux moyens d'aspiration, est plaquée contre la seconde moitié de la paroi latérale et des flasques de la cage, pour éviter qu'elle soit endommagée.

Pour vider la cage une fois le pressurage effectué, on ouvre une porte prévue en général dans la première moitié de la paroi latérale et l'on fait tourner la cage de sorte que la partie solide restant dans la chambre de pressurage s'évacue progressivement au travers de l'orifice découvert par la porte. Bien entendu, pour éviter d'endommager la membrane, le vide est fait dans la chambre de commande lors de la phase de vidange.

De même, lors du remplissage de la cage, il est possible de faire tourner celle-ci autour de son axe pour répartir uniformément la matière, le vide étant là aussi effectué dans la chambre de commande.

Ce type de pressoir donne en général toute satisfaction, mais il arrive parfois que la membrane se déchire, en particulier lors des phases de pressurage.

L'invention vise d'une façon générale à augmenter la fiabilité de ce type de pressoir et en particulier à éviter les déchirures de la membrane.

Elle propose à cet effet un pressoir du même genre mais caractérisé en ce que ladite membrane est élastique, présente une résistance à la rupture, mesurée selon la norme NF T 46002, au moins égale à 35 Mpa, et un allongement à la rupture, mesuré selon la même norme, au moins égal à 400 %, et présente au repos une surface comprise entre 80 et 98 % de la surface de ladite seconde moitié de la paroi latérale et des flasques de la cage.

Dans le pressoir selon l'invention, la membrane est élastique et ne comporte donc pas de tissu en fibres de polyester pour la renforcer de sorte qu'elle aurait normalement dû être moins résistante que la membrane utilisée en pratique jusqu'ici dans les pressoirs de ce type.

Cependant, de façon tout à fait surprenante, lorsque l'on combine les caractéristiques dimensionnelles et les caractéristiques d'élasticité susmentionnées, on obtient en fait, selon les expérimentations menées par la demanderesse, un taux de déchirure de la membrane extrêmement réduit, voire une suppression totale de cet incident.

Les raisons exactes pour lesquelles ce résultat surprenant est obtenu ne sont pas parfaitement élucidées mais la demanderesse pense que les caractéristiques dimensionnelles et d'élasticité de la membrane selon l'invention permettent à celle-ci de s'affranchir dans une certaine mesure de l'effet collant de la partie liquide telle que du jus de raisin, qui a tendance à faire garder à la membrane, par endroits, la forme prise lors de la phase d'émiettage.

La demanderesse pense plus précisément que la combinaison des caractéristiques dimensionnelles et des caractéristiques d'élasticité de la membrane selon l'invention, permet à la membrane d'avoir, lors des phases d'émiettage, un degré de tension et de dilatation tel que la contraction puis la nouvelle dilatation de la membrane lors du passage d'une phase d'émiettement à une phase de pressurage, diminue fortement les effets de la pellicule collante sur la membrane, ce grâce à quoi la membrane selon l'invention peut se comporter, lorsqu'elle est en contact avec la matière telle que de la vendange, de façon plus homogène que la membrane antérieure renforcée par un tissu en fibres de polyester, ce comportement plus homogène permettant à la membrane d'épouser au mieux la matière à pressurer, et plus généralement d'éviter les concentrations de contrainte qui sont à l'origine des déchirures de la membrane antérieure.

Selon des caractéristiques préférées, en raison des résultats qu'elles permettent d'obtenir :
- ladite membrane présente une constitution à chaîne et trame avec la résistance à la rupture et l'allongement à la rupture qui sont similaires en chaîne et en trame ; et/ou
- ladite membrane présente une résistance à la rupture et un allongement à la rupture, mesurés suivant ladite norme, respectivement de 40 Mpa et de 400 % ; ou bien
- ladite membrane présente une résistance à la rupture et un allongement à la rupture, mesurés selon ladite norme, respectivement de 35 Mpa et de 450 % .

Selon d'autres caractéristiques préférées, pour les mêmes raisons :
- ladite membrane présente une épaisseur, mesurée suivant la norme NF EN ISO 2286-3, comprise entre 0,8 et 1,2 mm ;
- ladite membrane présente une longueur développée entre lesdits bords longitudinaux, au moins égale à 1 m ;
- ladite membrane présente une dureté, mesurée suivant la norme NF T 46052, comprise entre 80 et 95 ShA ;
- ladite membrane est en polyuréthane polycarbonate ;
- lesdits moyens d'aspiration sont adaptés à produire dans la chambre de commande une valeur de vide qui est au maximum de 0,08 bars en-dessous de la pression atmosphérique ; et/ou
- lesdits moyens d'admission d'un agent de pression sont adaptés à produire dans ladite chambre de commande une valeur de pression qui est au maximum de 2 bars au-dessus de la pression atmosphérique.

L'exposé de l'invention sera maintenant poursuivi par la description d'un exemple de réalisation, donnée ci-après à titre illustratif et non limitatif, en référence aux dessins annexés. Sur ceux-ci :
- la figure 1 est une vue schématique en élévation-coupe suivant un plan longitudinal, d'un pressoir conforme à l'invention, la membrane étant en position de repos ;
- la figure 2 est une vue schématique de la cage de ce pressoir et de la membrane dont elle est munie, en élévation-coupe suivant un plan transversal, la membrane étant au repos ;
- la figure 3 est une vue similaire à la figure 2 montrant la position de la membrane pendant une phase de remplissage ou une phase d'émiettage ; et
- la figure 4 est une vue similaire à la figure 1, montrant le pressoir pendant une phase de pressurage.

Le pressoir 1 illustré sur les dessins comporte une cage 2 montée à rotation autour de son axe 3 sur des potelets 4 reposant sur le sol, ces potelets supportant également, juste au-dessus du sol, un bac 5 de récupération de la partie liquide de la matière traitée, en l'occurrence de récupération du jus de raisin lorsque cette matière est de la vendange.

La cage 2 présente une paroi latérale cylindrique 6 et deux flasques 7 fermant la cage 2 respectivement à une extrémité et à l'autre extrémité de la paroi latérale 6.

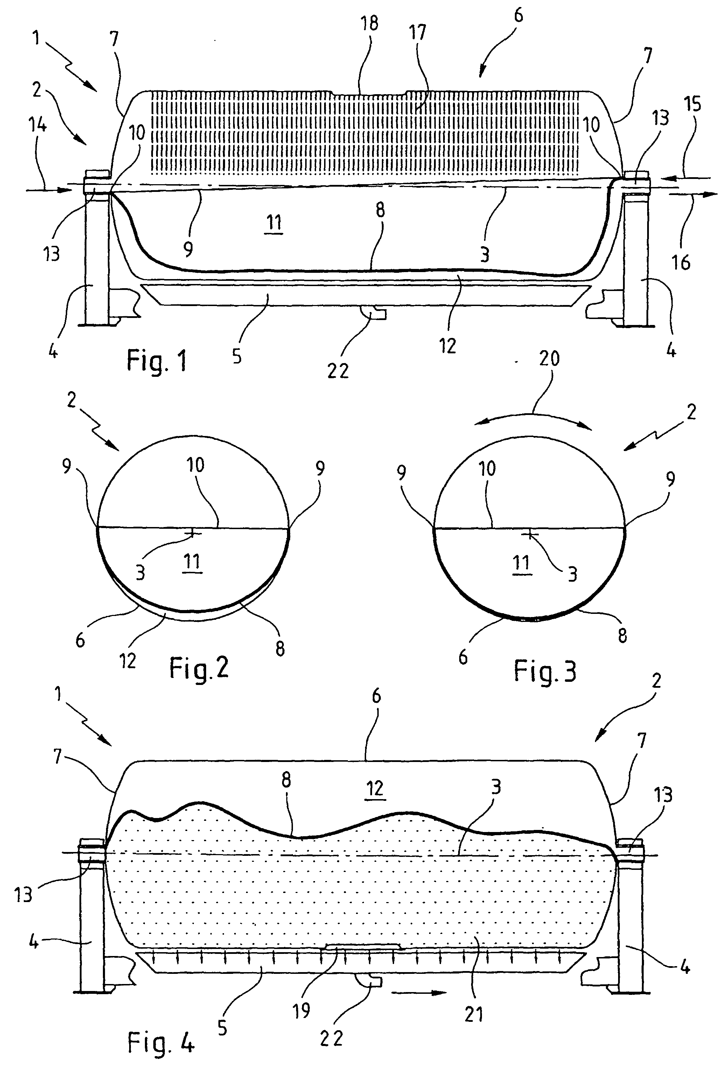

A l'intérieur de la cage 2, est disposée une membrane souple déformable 8, fixée de manière étanche, d'une part à la paroi latérale 6 suivant deux bords longitudinaux opposés 9, et, d'autre part, aux flasques 7 suivant deux bords transversaux respectifs 10 chacun situé entre une extrémité d'un bord 9 et une extrémité de l'autre bord 9, la membrane 8 ayant au repos (figures 1 et 2) à peu près la forme d'une moitié de la cage 2.

Le volume interne de celle-ci est subdivisé par la membrane 8 en une chambre de pressurage 11 et une chambre de commande 12.

La chambre de pressurage 11 est délimitée par la membrane 8, par la moitié de la paroi latérale 6, située entre les bords longitudinaux 9, que l'on voit en haut sur les figures 1 et 2 ainsi que par la moitié de chacun des flasques 7 que l'on voit au-dessus des bords transversaux 10 sur les figures 1 et 2.

La chambre de commande 12 est quant à elle délimitée par la membrane 8 et par l'autre moitié de la paroi latérale 6 et des flasques 7.

Pour permettre le montage à rotation de la cage 2 sur les potelets 4, cette cage comporte, au centre de chacun des flasques 7, un tourillon 13 qui sert également de tubulure à la chambre de pressurage 11 ou à la chambre de commande 12.

Plus précisément, la tubulure 13 que l'on voit à gauche sur la figure 1, sert de tubulure d'introduction de la matière telle que de la vendange dans la chambre 11, les moyens de pompage de cette matière et de raccordement à la tubulure 13 étant symbolisés sur la figure 1 par la flèche 14.

La tubulure 13 que l'on voit à droite sur la figure 1 est en communication avec la chambre de commande 12 et permet soit l'aspiration de l'air qui y est contenu, soit l'admission dans cette chambre d'air comprimé, le raccordement et les canalisations connectées à la tubulure 13 ainsi que le compresseur et la pompe à vide permettant l'aspiration ou l'admission d'air comprimé, étant symbolisés sur la figure 1 respectivement par les flèches 15 et 16.

Pour permettre la séparation entre les parties solide et liquide de la matière introduite dans la chambre de pressurage 11, la paroi latérale 6 présente des perforations 17, illustrées uniquement sur la figure 1, qui permettent le drainage de la matière.

Pour évacuer hors de la cage, et plus précisément hors de la chambre de pressurage 11, la partie solide de la matière qui reste après pressurage, la paroi 6 est pourvue d'une bouche d'évacuation 18 obturable par une porte 19 (illustrée uniquement sur la figure 4).

Avant d'introduire la matière telle que de la vendange dans la chambre 11, on actionne les moyens d'aspiration 16 afin de produire le vide dans la chambre de commande 12, par exemple en portant la pression de cette chambre à une valeur se trouvant à 0,05 bars en-dessous de la pression atmosphérique.

Il en résulte que la membrane 8, qui est élastique, se dilate et vient se plaquer, en étant parfaitement lisse, sur la paroi 6 située du côté de la chambre 12, comme illustré sur la figure 3.

On actionne alors les moyens d'entraînement à rotation de la cage 2, symbolisés sur la figure 3 par la flèche double 20 puis l'on fait pénétrer la matière telle que de la vendange dans la chambre 11 au travers de la tubulure 13 correspondante. La rotation de la cage 2, alternativement dans un sens et dans l'autre, lors de cette phase de remplissage, permet de répartir de manière relativement régulière la matière dans la chambre 11.

Une fois le remplissage effectué, on place la cage 2 dans une position où les perforations de drainage 17 regardent le bac 5 de récupération du liquide contenu dans la matière et l'on actionne les moyens 15 d'admission d'air comprimé dans la chambre de commande 12, jusqu'à ce que celle-ci soit à une pression prédéterminée, par exemple comprise entre 0,2 et 2 bars au-dessus de la pression atmosphérique.

La membrane 8 s'applique alors contre la matière 21 introduite dans la chambre 11 en l'épousant au mieux, de sorte que la matière 21 est portée à la pression régnant dans la chambre 12.

Sous l'effet de cette pression et sous l'effet de la gravité, la partie liquide de la matière 21 s'écoule au travers des perforations de drainage 17, ainsi que montré par des flèches sur la figure 4, et rejoint le bac de récupération 5 dont elle est évacuée par la bonde 22 située au point le plus bas du bac 5.

Une fois que le liquide cesse de s'écouler, on actionne les moyens d'aspiration 16 jusqu'à ce que la membrane 8 soit à nouveau plaquée contre la paroi latérale 6 et les flasques 7 de la cage puis l'on fait tourner cette dernière dans un sens et dans l'autre afin de réaliser un émiettage, c'est-à-dire une dislocation du gâteau de matière qui s'était formé sous l'effet de la pression.

On réalise ensuite un certain nombre de phases de pressurage et d'émiettage puis, lorsque l'on considère que toute la partie liquide de la matière 21 a été extraite, l'on ouvre la porte 19 et l'on fait tourner la cage 2, avec bien sûr la membrane 8 plaquée contre la paroi latérale 6 et les flasques 7, de sorte que la partie solide de la matière 21 qui est restée dans la chambre 11 s'évacue progressivement au travers de l'ouverture 18.

On notera que dans l'exemple illustré, la membrane est réalisée dans une feuille de polyuréthane polycarbonate ayant une constitution à chaîne et trame, la résistance à la rupture et l'allongement à la rupture étant similaires en chaîne et en trame et étant respectivement égale à 35 Mpa et égal à 450 %, en mesure suivant la norme NF T 46002, l'épaisseur de cette feuille, mesurée suivant la norme NF EN IS0 2286-3, étant de l'ordre de 1 mm, la longueur développée de la membrane 8 entre les bords longitudinaux 9 étant au moins égale à 1 m, la dureté de cette feuille, mesurée suivant la norme NF T 46052, étant de 85 ShA, la membrane 8 présentant au repos une surface de l'ordre de 90 % de la surface de la moitié de la paroi latérale 6 et des flasques 7 que l'on voit en-dessous des bords 9 et 10 sur les figures 1 et 2.

Grâce à ces caractéristiques, la membrane 8 présente un risque de déchirure extrêmement réduit lors des phases de pressurage telles que celle illustrée sur la figure 4.

Dans des variantes non illustrées, la membrane présente au repos une surface de proportions différentes par rapport à la cage, comprise entre 80 et 98 % de la surface de la moitié susmentionnée ; l'épaisseur de la membrane, mesurée suivant la norme susmentionnée, est comprise entre 0,8 et 1,2 mm ; la dureté, mesurée suivant la norme susmentionnée, est comprise entre 80 et 95 ShA ; la membrane est dans une matière différente du polyuréthane polycarbonate ; et/ou la résistance à la rupture et l'allongement à la rupture, mesurés suivant la norme susmentionnée, sont respectivement de 35 Mpa et de 450 % ou plus généralement au moins égale à 35 Mpa et au moins égal à 400 %, respectivement.

Dans d'autres variantes non illustrées, l'admission de la matière à pressurer se fait par d'autres moyens que le tourillon-tubulure 13, par exemple par l'ouverture 18, on utilise un agent de pression autre que de l'air comprimé, par exemple un gaz inerte, voire un liquide, par exemple de l'eau ; on emploie d'autres moyens de drainage que les perforations 17, par exemple des canaux perforés disposés à l'intérieur de la cage 7 ; et/ou une autre matière que de la vendange est traitée, en particulier des fruits autres que le raisin.

Plus généralement, on rappelle que l'invention ne se limite pas aux exemples décrits et représentés.

## Revendications

1. Pressoir pour séparer les parties solide et liquide d'une matière (21) telle que de la vendange, comportant :
- une cage (2) présentant une paroi latérale cylindrique (6) et deux flasques (7) fermant ladite cage respectivement à une extrémité et à l'autre extrémité de ladite paroi latérale (6) ;
- une membrane souple déformable (8) disposée dans ladite cage (2), fixée de manière étanche à la paroi latérale (6) de celle-ci suivant deux bords longitudinaux opposés (9) et fixée de manière étanche aux flasques (7) suivant deux bords transversaux respectifs (10) chacun situé entre une extrémité d'un bord longitudinal (9) et une extrémité de l'autre bord longitudinal (9) de sorte que ladite membrane (8) sépare le volume interne de ladite cage (2) en une chambre de pressurage (11) délimitée par ladite membrane (8), par une première moitié de ladite paroi latérale (6) située entre lesdits deux bords transversaux opposés (9) et par une première moitié de chacun desdits flasques (7) située, par rapport aux bords transversaux respectifs (10), du côté de la première moitié de la paroi latérale (6), et en une chambre de commande (12) délimitée par ladite membrane (8), par la seconde moitié de ladite paroi latérale (6) et par la seconde moitié de chacun desdits flasques (7), ladite membrane souple (8) ayant au repos à peu près la forme d'une moitié de la cage (2) ;
- des moyens de drainage (17) équipant ladite première moitié de la paroi latérale (6) de la cage ;
- des moyens d'introduction (13, 14) de ladite matière dans la chambre de pressurage (11);
- des moyens de récupération (5) de ladite partie liquide de cette matière (21) quittant la chambre de pressurage (11) par lesdits moyens de drainage (17) ;
- des moyens (13, 15) d'admission d'un agent de pression dans ladite chambre de commande (12) et des moyens (13, 16) d'aspiration dudit agent de pression hors de ladite chambre de commande (12) ;
- des moyens (4, 13) de montage à rotation de ladite cage autour de son axe (3) dans une position où celui-ci est disposé horizontalement ; et
- des moyens (20) pour entraîner sélectivement à rotation ladite cage (2) autour de son axe (3) ;
**caractérisé en ce que** ladite membrane (8) est élastique, présente une résistance à la rupture, mesurée selon la norme NF T 46002, au moins égale à 35 Mpa, et un allongement à la rupture, mesuré selon la même norme, au moins égal à 400 %, et présente au repos une surface comprise entre 80 et 98 % de la surface de ladite seconde moitié de la paroi latérale (6) et des flasques (7) de la cage (2).

2. Pressoir selon la revendication 1, **caractérisé en ce que** ladite membrane (8) présente une constitution à chaîne et trame avec la résistance à la rupture et l'allongement à la rupture qui sont similaires en chaîne et en trame.

3. Pressoir selon l'une quelconque des revendications 1 ou 2, **caractérisé en ce que** ladite membrane (8) présente une résistance à la rupture et un allongement à la rupture, mesurés suivant ladite norme, respectivement de 40 Mpa et de 400 %.

4. Pressoir selon l'une quelconque des revendications 1 ou 2, **caractérisé en ce que** ladite membrane (8) présente une résistance à la rupture et un allongement à la rupture, mesurés selon ladite norme, respectivement de 35 Mpa et de 450 %.

5. Pressoir selon l'une quelconque des revendications 1 à 4, **caractérisé en ce que** ladite membrane (8) présente une épaisseur, mesurée suivant la norme NF EN ISO 2286-3, comprise entre 0,8 et 1,2 mm.

6. Pressoir selon l'une quelconque des revendications 1 à 5, **caractérisé en ce que** ladite membrane (8) présente une longueur développée entre lesdits bords longitudinaux (9), au moins égale à 1 m.

7. Pressoir selon l'une quelconque des revendications 1 à 6, **caractérisé en ce que** ladite membrane (8) présente une dureté, mesurée suivant la norme NF T 46052, comprise entre 80 et 95 ShA.

8. Pressoir selon l'une quelconque des revendications 1 à 7, **caractérisé en ce que** ladite membrane (8) est en polyuréthane polycarbonate.

9. Pressoir selon l'une quelconque des revendications 1 à 8, **caractérisé en ce que** lesdits moyens d'aspiration (13, 16) sont adaptés à produire dans la chambre de commande (12) une valeur de vide qui est au maximum de 0,08 bars en-dessous de la pression atmosphérique.

10. Pressoir selon l'une quelconque des revendications 1 à 9, **caractérisé en ce que** lesdits moyens d'admission (13, 15) d'un agent de pression sont adaptés à produire dans ladite chambre de commande (12) une valeur de pression qui est au maximum de 2 bars au-dessus de la pression atmosphérique.

## Patentansprüche

1. Presse zum Trennen der festen und flüssigen Anteile einer Substanz (21) wie etwa gelesener Trauben, mit:
- einem Käfig (2), der eine zylindrische Seitenwand (6) und zwei Deckel (7), die den Käfig am einen bzw. am anderen Ende der Seitenwand (6) verschließen, aufweist;
- einer verformbaren weichen Membran (8), die in dem Käfig (2) angeordnet und an dessen Seitenwand (6) längs zweier gegenüberliegender longitudinaler Kanten (9) dicht befestigt ist und an den Deckeln (7) längs zweier entsprechender transversaler Kanten (10), wovon sich jede zwischen einem Ende einer longitudinalen Kante (9) und einem Ende der anderen longitudinalen Kante (9) befindet, dicht befestigt ist, derart, dass die Membran (8) das Innenvolumen des Käfigs (2) unterteilt in eine Druckbeaufschlagungskammer (11), die begrenzt ist durch die Membran (8), durch eine zwischen den zwei gegenüberliegenden transversalen Kanten (9) befindliche erste Hälfte der Seitenwand (6) und durch eine erste Hälfte jedes der Deckel (7), die sich in Bezug auf die jeweiligen transversalen Kanten (10) auf Seiten der ersten Hälfte der Seitenwand (6) befindet, und in eine Steuerkammer (12), die begrenzt ist durch die Membran (8), durch die zweite Hälfte der Seitenwand (6) und durch die zweite Hälfte jedes der Deckel (7), wobei die weiche Membran (8) im Ruhezustand nahezu die Form einer Hälfte des Käfigs (2) hat;
- Entleerungsmitteln (17), mit denen die erste Hälfte der Seitenwand (6) des Käfigs ausgerüstet ist;
- Mitteln (13, 14) zum Einleiten der Substanz in die Druckbeaufschlagungskammer (11);
- Wiedergewinnungsmitteln (5) für den flüssigen Anteil dieser Substanz (21), der die Druckbeaufschlagungskammer (11) durch die Entleerungsmittel (17) verlässt;
- Mitteln (13, 15) zum Einlassen eines Druckmittels in die Steuerkammer (12) und Mitteln (13, 16) zum Saugen des Druckmittels aus der Steuerkammer (12);
- Mitteln (4, 13), um den Käfig um seine Achse (3) drehbar in einer Lage anzubringen, in der er horizontal angeordnet ist; und
- Mitteln (20), um den Käfig (2) wahlweise zu einer Drehung um seine Achse (3) anzutreiben;
**dadurch gekennzeichnet, dass** die Membran (8) elastisch ist, einen gemäß der Norm NF T 46002 gemessenen Reißwiderstand von wenigstens 35 MPa und eine gemäß derselben Norm gemessene Dehnung bis zur Reißgrenze von wenigstens gleich 400 % aufweist und im Ruhezustand eine Oberfläche aufweist, die im Bereich von 80 bis 98 % der Oberfläche der zweiten Hälfte der Seitenwand (6) und der Deckel (7) des Käfigs (2) liegt.

2. Presse nach Anspruch 1, **dadurch gekennzeichnet, dass** die Membran (8) einen Aufbau mit Kette und Schuss aufweist, wobei der Reißwiderstand und die Dehnung bis zur Reißgrenze für Kette und Schuss ähnlich sind.

3. Presse nach einem der Ansprüche 1 oder 2, **dadurch gekennzeichnet, dass** die Membran (8) einen Reißwiderstand und eine Dehnung bis zur Reißgrenze, die gemäß der genannten Norm gemessen werden, von 40 MPa bzw. 400 % aufweist.

4. Presse nach einem der Ansprüche 1 oder 2, **dadurch gekennzeichnet, dass** die Membran (8) einen Reißwiderstand und eine Dehnung bis zur Reißgrenze, die gemäß der genannten Norm gemessen werden, von 35 MPa bzw. 450 % aufweist.

5. Presse nach einem der Ansprüche 1 bis 4, **dadurch gekennzeichnet, dass** die Membran (8) eine gemäß der Norm NF EN ISO 2286-3 gemessene Dicke aufweist, die im Bereich von 0,8 bis 1,2 mm liegt.

6. Presse nach einem der Ansprüche 1 bis 5, **dadurch gekennzeichnet, dass** die Membran (8) eine zwischen ihren longitudinalen Kanten (9) vorhandene Länge, die wenigstens gleich 1 m ist, aufweist.

7. Presse nach einem der Ansprüche 1 bis 6, **dadurch gekennzeichnet, dass** die Membran (8) eine gemäß der Norm NF T 46052 gemessene Härte im Bereich von 80 bis 95 ShA aufweist.

8. Presse nach einem der Ansprüche 1 bis 7, **dadurch gekennzeichnet, dass** die Membran (8) aus Polyurethan-Polycarbonat besteht.

9. Presse nach einem der Ansprüche 1 bis 8, **dadurch gekennzeichnet, dass** die Saugmittel (13, 16) in der Steuerkammer (12) einen Vakuumwert erzeugen können, der höchstens 0,08 Bar unterhalb des Atmosphärendrucks liegt.

10. Presse nach einem der Ansprüche 1 bis 9, **dadurch gekennzeichnet, dass** die Druckmittel-Einlassmittel (13, 15) in der Steuerkammer (12) einen Druckwert erzeugen können, der höchstens 2 Bar über dem Atmosphärendruck liegt.

## Claims

1. Press for separating the solid and liquid parts of a matter (21) such as the grape harvest, comprising:
- a cage (2) having a cylindrical side wall (6) and two plates (7) closing said cage respectively at one end and at the other end of said side wall (6);
- a flexible deformable membrane (8) arranged in said cage (2), fixed in a tight manner to the side wall (6) of the latter along two opposite longitudinal edges (9) and fixed in a tight manner to the plates (7) along two respective transverse edges (10) each situated between one end of a longitudinal edge (9) and one end of the other longitudinal edge (9) so that said membrane (8) divides the internal volume of said cage (2) into a pressing chamber (11) delimited by said membrane (8), by a first half of said side wall (6) located between said two opposite transverse edges (9) and by a first half of each of said plates (7) situated, relative to the respective transverse edges (10), on the side of the first half of the side wall (6), and a control chamber (12) delimited by said membrane (8), by the second half of said side wall (6) and by the second half of each of said plates (7), said flexible membrane (8) having when at rest more or less the form of one half of the cage (2);
- means (17) of drainage fitted to said first half of the side wall (6) of the cage;
- means (13, 14) of introducing said matter into the pressing chamber (11);
- means (5) of collecting said liquid part of this matter (21) leaving the pressing chamber (11) by said means (17) of drainage;
- means (13, 15) of admitting a pressure agent into said control chamber (12) and means (13,16) of sucking said pressure agent out of the control chamber (12);
- means (4, 13) of assembling said cage in rotation around its axis (3) in a position where the latter is arranged horizontally; and
- means (20) of selectively rotating said cage (2) around its axis (3);
**characterised in that** said membrane (8) is elastic, has a resistance to rupture, measured according to the standard NF T 46002, at least equal to 35 Mpa, and a stretching before rupture, measured according to the same standard, at least equal to 400 %, and has when at rest a surface area of between 80 and 98 % of the surface of said second half of the side wall (6) and plates (7) of the cage (2).

2. Press according to claim 1, **characterised in that** said membrane (8) has a warp and weft structure with a resistance to rupture and stretching before rupture which are similar in warp and weft,

3. Press according to any one of claims 1 or 2, **characterised in that** said membrane (8) has a resistance to rupture and stretching before rupture measured according to said standard, of 40 Mpa and 400% respectively.

4. Press according to any one of claims 1 or 2, **characterised in that** said membrane (8) has a resistance to rupture and a stretching before rupture, measured according to said standard, of 35 Mpa and 450 % respectively.

5. Press according to any one of claims 1 to 4, **characterised in that** said membrane (8) has a thickness, measured according to the standard NF EN ISO 2286-3, of between 0.8 and 1.2 mm.

6. , Press according to any one of claims 1 to 5, **characterised in that** said membrane (8) has a spread length between said longitudinal edges (9) at least equal to 1 m.

7. Press according to any one of claims 1 to 6, **characterised in that** said membrane (8) has a hardness, measured according to the standard NF T 46052, of between 80 and 95 ShA.

8. Press according to any one of claims 1 to 7, **characterised in that** said membrane (8) is made from polyurethane polycarbonate.

9. Press according to any one of claims 1 to 8, **characterised in that** said means (13, 16) of suction are suitable for producing in the control chamber (12) a vacuum value which is at most 0.08 bars below atmospheric pressure.

10. Press according to any one of claims 1 to 9, **characterised in that** said means (13, 15) of admitting a pressure agent are suitable for producing in said control chamber (12) a pressure value which is at most 2 bars above atmospheric pressure.
